(19) Europäisches Patentamt
European Patent Office
Office européen des brevets

(11) EP 1 501 843 B1

(12) **EUROPEAN PATENT SPECIFICATION**

(45) Date of publication and mention of the grant of the patent:
**14.06.2006 Bulletin 2006/24**

(21) Application number: **03726205.2**

(22) Date of filing: **08.04.2003**

(51) Int Cl.:
***C07F 17/00*** *(2006.01)* ***C08F 10/00*** *(2006.01)*
***C08F 4/64*** *(2006.01)* *C07F 7/08* *(2006.01)*

(86) International application number:
**PCT/US2003/010543**

(87) International publication number:
**WO 2003/091265 (06.11.2003 Gazette 2003/45)**

(54) **ALKARYL-SUBSTITUTED GROUP 4 METAL COMPLEXES, CATALYSTS AND OLEFIN POLYMERIZATION PROCESS**

ALKARYLSUBSTITUIERTE KOMPLEXE VON GRUPPE-4-METALLEN, KATALYSATOREN UND VERFAHREN ZUR POLYMERISIERUNG VON OLEFINEN

COMPLEXES METALLIQUES DE GROUPE 4 A SUBSTITUTION ALKARYLE, AINSI QUE PROCEDE DE POLYMERISATION D'OLEFINES ET DE CATALYSEURS

(84) Designated Contracting States:
**DE NL**

(30) Priority: **23.04.2002 US 128788**
**23.05.2002 US 154534**

(43) Date of publication of application:
**02.02.2005 Bulletin 2005/05**

(73) Proprietor: **DOW GLOBAL TECHNOLOGIES INC.**
**Midland, Michigan 48674 (US)**

(72) Inventors:
- **KLOSIN, Jerzy**
  **Midland, MI 48642 (US)**
- **KRUPER, William, J. Jr**
  **Sanford, MI 48657 (US)**
- **NICKIAS, Peter, N.**
  **Midland, MI 48642 (US)**
- **ROOF, Gordon, R.**
  **Midland, MI 48642 (US)**
- **SOTO, Jorge**
  **Midland, MI 48642 (US)**

(74) Representative: **Burford, Anthony Frederick et al**
**Beck Greener**
**Fulwood House**
**12 Fulwood Place**
**London WC1V 6HR (GB)**

(56) References cited:
**EP-A- 1 253 158** **WO-A-01/42315**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to a class of metal complexes, the ligands used to prepare these metal complexes, polymerization catalysts derived therefrom, and the resulting polymerization processes using the same. More particularly, such metal complexes are characterized by a nitrogen containing aliphatic or cycloaliphatic moiety that is substituted with one or more aryl groups, an aryl- substituted silane bridging group, or one or more Group 14 organometalloid substituents on the metal.

EP-A-923,589, which is equivalent to WO98/06727, published February 19, 1998, disclosed Group 4 metal complexes containing a heteroatom substituent at the 3-position of the cyclopentadienyl, especially indenyl, ligand groups. Particular heteroatom containing substituents included dihydrocarbylamino substituents including dimethylamino, diethylamino, methylethylamino, methylphenylamino, dipropylamino, dibutylamino, piperidinyl, morpholinyl, pyrrolidinyl, hexahydro-1H-azepin-1-yl, hexahydro-1(2H)-azocinyl, octahydro-1H-azonin-1-yl, and octahydro-1(2H)-azecinyl.

EP-A-577,581 discloses unsymmetrical bis-Cp metallocenes containing a fluorenyl ligand with heteroatom substituents. E. Barsties; S. Schaible; M.-H. Prosenc; U. Rief; W. Roll; O. Weyland; B. Dorerer; H.-H. Brintzinger *J. Organometallic Chem.* 1996, *520*, 63-68, and H. Plenio; D. Birth *J. Organometallic Chem.* 1996, *519*, 269-272 disclose systems in which the cyclopentadienyl ring of the indenyl is substituted with a dimethylamino group in non-bridged and Si-bridged bis-indenyl complexes useful for the formation of isotactic polypropylene and polyethylene.

Disclosure of random heteroatom substitution in mono-Cp metallocenes is found in EP-A-416,815, WO 95/07942, WO 96/13529, and USP's 5,096,867 and 5,621,126. Specific heteroatom substitution of the 3- and 2- position of indenyl complexes of group 4 metals was disclosed in WO98/06727 and WO/98/06728 respectively. WO 01/42315 (equivalent to EP-A-1,253,158) disclosed variously substituted mono-Cp metallocenes especially suited for polymerization of ethylene and $\alpha$-olefin or ethylene and styrene.

Despite the advance in the art, particular higher use temperature, obtained by such prior art metal complexes as were disclosed in the foregoing reference, there remains a desire for improved metal complexes capable of even further increase in use temperature that are still capable of forming catalyst compositions useful in producing polymers having high molecular weights and, for ethylene/ higher $\alpha$-olefin copolymers, high incorporation of comonomer. The subject compositions of this invention show unexpected improvement in these desirable features.

According to the present invention there is provided a process for polymerizing ethylene, at least one diene, and optionally a $C_{3-12}$ $\alpha$-olefin by contacting a mixture thereof with a metal complex and an activating cocatalyst under addition polymerization conditions and recovering the resulting polymer product, wherein the metal complex corresponds to the formula:

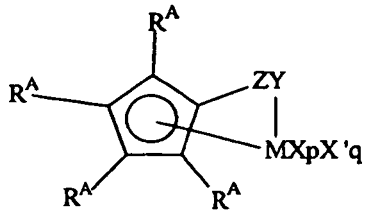

(I)

where M is a Group 4 metal that is in the +2, +3 or +4 formal oxidation state;

$R^A$ independently each occurrence is hydrogen, or a hydrocarbyl, halohydrocarbyl, hydrocarbyloxyhydrocarbyl, dihydrocarbylaminohydrocarbyl, dihydrocarbylamino, hydrocarbyloxy, hydrocarbylsilyl, or trihydrocarbylsilylhydrocarbyl group of from 1 to 80 atoms, not counting hydrogen, and two or more $R^A$ groups are covalently linked together;

Z is $(R^D)_2Si=$, wherein $R^D$ independently each occurrence is $C_{7-20}$ alkaryl or two $R^D$ groups together are alkyl-or polyalkyl-substituted arylene of up to 40 carbons; and

Y is bonded to M and Z and is selected from the group consisting of -O-, -S-, $-NR^E-$, and $-PR^E-$; wherein, $R^E$ independently each occurrence is hydrogen, or a member selected from hydrocarbyl, hydrocarbyloxy, silyl, halogenated alkyl, halogenated aryl, and combinations thereof, said $R^E$ having up to 20 nonhydrogen atoms

X is an anionic or dianionic ligand group having up to 60 atoms exclusive of the class of ligands that are cyclic, delocalized, n-bound ligand groups;

X' independently each occurrence is a neutral ligand having up to 40 atoms;

p is zero, 1 or 2, and is two less than the formal oxidation state of M when X is an anionic ligand, and when X is a dianionic ligand group, p is 1; and

q is zero, 1 or 2

characterized in that

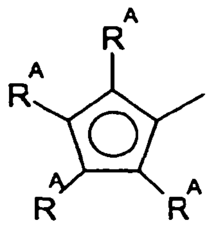

is a 2-alkyl-4-arylinden-1-yl group of up to 30 total carbon atoms.

Surprisingly, the activity of catalysts comprising the foregoing metal complexes is relatively unaffected by the diene in comparison with similar metal complexes lacking in the foregoing structure, and the resulting polymers contain relative large quantities of the polymerized diene.

The polymerization of ethylene in combination with a diene, especially conjugated dienes and polycyclic bulky dienes such as ethylidene norbomene, optionally in the presence of a third monomer, especially a $C_{3-12}$ $\alpha$-olefin, is particularly advantageously accomplished by the use of metal complexes according to the present invention according to formula (I) containing a 2-methyl-4-phenylinden-1-yl or 2-methyl-4-naphthylinden-1-yl group.

A preferred process of this invention is a high temperature solution polymerization process comprising contacting one or more addition polymerizable monomers under polymerization conditions with one of the aforementioned catalyst systems at a temperature from 50°C to 250°C, preferably from 150°C to 250°C, most preferably from 175°C to 220°C.

It is to be understood that the foregoing formula (I) depicts one of several equivalent interannular, double bond isomers, and that all such isomeric structures are intended to be included by the formulas.

The final embodiment of the invention is the use of one of the foregoing compounds of formula (IA) or (IIA) in a synthesis to produce a Group 4 metal complex of formula (I) or (II).

The present catalysts and processes are especially suited for use in the production of high molecular weight polymers of olefin monomers, over a wide range of polymerization conditions, and especially at elevated temperatures, with exceptionally high catalyst efficiencies. They are especially useful for the solution polymerization of ethylene/propylene/diene interpolymers (EPDM polymers) wherein the diene is ethylidenenorbornene, 1,4-hexadiene or similar nonconjugated diene. The use of elevated temperatures dramatically increases the productivity of such processes due to the fact that increased polymer solubility at elevated temperatures allows the use of increased conversions (higher concentration of polymer product) without exceeding solution viscosity limitations of the polymerization equipment as well as reduced energy costs needed to devolatilize the reaction product.

The metal complexes of this invention may also be supported on a support material and used in olefin polymerization processes in a slurry or in the gas phase. Additionally, those complexes wherein $R^A$ is ethylenically unsaturated may be used to form polymeric reaction products via polymerization of copolymerization of such ethylenic unsaturation in the $R^A$ moiety. Such products may be employed in a slurry or gas phase polymerization without need for an additional support material. Such a polymeric catalyst may be formed by prepolymerization of the functionalized metal complex, optionally with one or more ethylenically unsaturated monomers, *in situ* in a polymerization reactor or in a separate reactor with recovery of the prepolymerized catalyst prior to the primary polymerization process.

All reference to the Periodic Table of the Elements herein shall refer to the Periodic Table of the Elements, published and copyrighted by CRC Press, Inc., 1997. Also, any reference to a Group or Groups shall be to the Group or Groups as reflected in this Periodic Table of the Elements using the IUPAC system for numbering groups. As used herein the term "comprising" is not intended to exclude any additional component, additive or step.

In a preferred embodiment of the invention, $R^D$ is $C_{1-10}$ alkyl substituted phenyl group, preferably a $C_{4-10}$ alkyl substituted phenyl group. In addition, it is independently highly desirable that $R^D$ is substituted in the para position or is a mixture of $C_{1-10}$ alkylphenyl substitution isomers. A most preferred $R^D$ group is p-n-butylphenyl.

A preferred Group 4 metal for all of the present metal complexes is titanium.

Preferred X groups are halo, $C_{1-10}$ hydrocarbyl or trialkylsilylalkyl groups of up to 20 carbons, or two such X groups together form a divalent ligand group. Most preferred X groups are chloro, methyl, trimethylsilylmethyl, or two X groups together are (dimethylsilylene)bis-(methylene), most preferably trimethylsilylmethyl, or two X groups together are (dimethylsilylene)bis(methylene). In the embodiments wherein X is trimethylsilylmethyl the complexes possess improved catalytic activity. In the embodiments wherein two X groups together are (dimethylsilylene)bis(methylene) the metal complexes additionally are particularly stable (robust) under typical storage and use conditions.

Preferably in all embodiments of the invention, Y is $-NR^E-$ where $R^E$ is $C_{1-6}$ alkyl or cycloalkyl, preferably isopropyl, cyclohexyl, or t-butyl.

Preferred X' groups in all of the foregoing embodiments of the invention are carbon monoxide; phosphines, especially trimethylphosphine, triethylphosphine, triphenylphosphine and bis(1,2-dimethylphosphino)ethane; $P(OR^K)_3$,

wherein $R^K$, independently each occurrence, is hydrocarbyl, silyl or silylhydrocarbyl; ethers, especially tetrahydrofuran; amines, especially pyridine, bipyridine, tetramethylethylenediamine (TMEDA), or triethylamine; olefins; and conjugated dienes having from 4 to 40 carbon atoms. Complexes including the latter X' groups, especially terminally hydrocarbyl substituted-1,3-butadienes, include those wherein the metal is in the +2 formal oxidation state.

In the foregoing compounds when p is 2, q is zero, M is in the +3 or +4 formal oxidation state, and X independently each occurrence preferably is chloride, methyl, benzyl, trimethylsilylmethyl, allyl, pyrollyl or two X groups together are 1,4-butane-diyl, 2-butene-1,4-diyl, 2,3-dimethyl-2-butene-1,4-diyl, 2-methyl-2-butene-1,4-diyl, xylyldiyl, or (dimethylsilylene)bis(methylene). Additionally, when p is 1, q is zero, M is in the +3 formal oxidation state, and X is preferably, 2-(N, N-dimethyl)aminobenzyl, 2-(N,N-dimethylaminomethyl)phenyl, allyl, or methallyl. Finally, when p is 0, q is 1, M is in the +2 formal oxidation state, and X' is 1,4-diphenyl-1,3-butadiene, 1,3-pentadiene or 2,4-hexadiene.

Highly preferred complexes according to the invention correspond to the formulas:

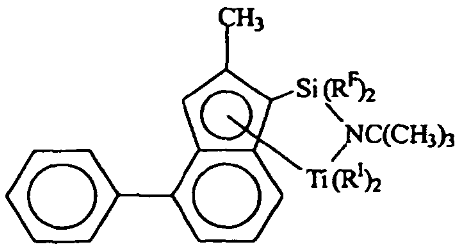
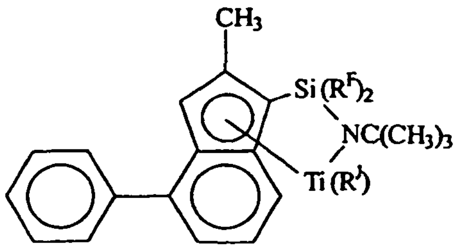
,

where $R^F$ is $C_{1-10}$ alkyl substituted phenyl, preferably $C_{4-10}$ alkyl substituted phenyl, most preferably n-butylphenyl, most highly preferably para-n-butylphenyl;

$R^I$ is chloro, methyl, benzyl, trimethylsilylmethyl or two $R^1$ groups together are (dimethylsilylene)bis(methylene); and

$R^J$ is allyl, 2-(dimethylamino)benzyl, 1,4-pentadiene or 1,4-diphenyl-1,3-butadiene.

Illustrative metal complexes according to the present invention include:

dichloro(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium;
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium dimethyl;
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium bis(trimethylsilylmethyl);
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium (dimethylsilylene)bis(methylene);
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium (III) 2-(N,N-dimethylamino)benzyl;
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium (II) 1,4-diphenyl-1,3-butadiene;
dichloro(N-(cyclohexyl)-1,1-di(4-n-butylphenyl)-1-((1,2,3,3a,7a-η)-2-methyl-4-phenyl-1 H-inden-1-yl)silanaminato-(2-)-N-)-titanium;
(N-(cyclohexyl)-1,1-di(4-n-butylphenyl)-1-((1,2,3,3a,7a-η)-2-methyl-4-phenyl-1H-inden-1-yl)silanaminato-(2-)-N-)-titanium dimethyl;
(N-(cyclohexyl)-1,1-di(4-n-butylphenyl)-1-((1,2,3,3a,7a-η)-2-methyl-4-phenyl-1H-inden-1-yl)silanaminato-(2-)-N-)-titanium bis(trimethylsilylmethyl);
(N-(cyclohexyl)-1,1-di(4-n-butylphenyl)-1-((1,2,3,3 a,7a-η)-2-methyl-4-phenyl-1H-inden-1-yl)silanaminato-(2-)-N-)-titanium (dimethylsilylene)bis(methylene);
(N-(cyclohexyl)-1,1-di(4-n-butylphenyl)-1-((1,2,3,3a,7a-η)-2-methyl-4-phenyl-1H-inden-1-yl)silanaminato-(2-)-N-)-titanium (III) 2-(N,N-dimethylamino)benzyl;
(N-(cyclohexyl)-1,1-di(4-n-butylphenyl)-1-((1,2,3,3a,7a-η)-2-methyl-4-phenyl-1H-inden-1-yl)silanaminato-(2-)-N-)-titanium (II) 1,4-diphenyl-1,3-butadiene;
dichloro(N-(1,1-dtmethylethyl)-1,1-di(4-methylphenyl)-1-((1,2,3,3a,7a-η)-2-methyl-4-phenyl-1H-inden-1-yl)silanaminato-(2-)-N-)-titanium;
(N-(1,1-dimethylethyl)-1,1-di(4-methylphenyl)-1-((1,2,3,3a,7a-η)-2-methyl-4-phenyl-1H-inden-1-yl)silanaminato-(2-)-N-)-titanium dimethyl;
(N-(1,1-dimethylethyl)-1,1-di(4-methylphenyl)-1-((1,2,3,3a,7a-η)-2-methyl-4-phenyl-1H-inden-1-yl)silanaminato-(2-)-N-)-titanium bis(trimethylsilylmethyl);
(N-(1,1-dimethylethyl)-1,1-di(4-methylphenyl)-1-((1,2,3,3a,7a-η)-2-methyl-4-phenyl-1H-inden-1-yl)sitanaminato-(2-)-N-)-titanium (dimethylsilylene)bis(methylene);
(N-(1,1-dimethylethyl)-1,1-di(4 methylphenyl)-1-((1,2,3,3a,7a-η)-2-methyl-4-phenyl-1H-inden-1-yl)silanalminato-(2-)-N-)-titanium (III) 2-(N,N-dimethylamino)benzyl;
(N-(1,1-dimethylethyl)-1,1-di(4-methylphenyl)-1-((1,2,3,3a,7a-η)-2-methyl-4-phenyl-1H-inden-1-yl)silanaminato-(2-)-N-)-titanium (II) 1,4-diphenyl-1,3-butadiene;
dichloro(N-(cyclohexyl)-1,1-di(4-methylphenyl)1-((1,2,3,3a-7a-η)-2-methyl-4-phenyl-1H-inden-1-yl)silanaminato-(2-)-N-)-titanium;
(N-(cyclohexyl)-1,1-di(4-methylphenyl)-1-((1,2,3,3a,7a-η)-2-methyl-4-phenyl-1H-inden-1-yl)silanaminato-(2-)-N-)-titanium dimethyl;
(N-(cyclohexyl)-1,1-di(4-methylphenyl)-1-((1,2,3,3a,7a-η)-2-methyl-4-phenyl-1H-inden-1-yl)silanaminato-(2-)-N-)-titanium bis(trimethylsilylmethyl);
(N-(cyclohexyl)-1,1-di(4-methylphenyl)-1-((1,2,3,3a,7a-η)-2-methyl-4-phenyl-1H-inden-1-yl)silanaminato-(2-)-N-)-titanium (dimethylsilylene)bis(methylene);
(N-(cyclohexyl)-1,1-di(4-methylphenyl)-1-((1,2,3,3a,7a-η)-2-methyl-4-phenyl-1H-inden-1-yl)silanaminato-(2-)-N-)-titanium (III) 2-(N,N-dimethylamino)benzyl;
(N-(cyclohexyl)-1,1-di(4-methylphenyl)-1-((1,2,3,3a,7a-η)-2-methyl-4-phenyl-1H-inden-1-yl)silanaminato-(2-)-N-)-titanium (II) 1,4-diphenyl-1,3-butadiene;

The complexes can be prepared by use of well known synthetic techniques. The reactions are conducted in a suitable noninterfering solvent at a temperature from -100 to 300°C, preferably from -78 to 100°C, most preferably from 0 to 50°C. Suitable reaction media for the formation of the complexes include aliphatic and aromatic hydrocarbons, ethers, and cyclic ethers, particularly branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; aromatic and hydrocarbyl-substituted aromatic compounds such as benzene, toluene, and xylene, $C_{1-4}$ dialkyl ethers, $C_{1-4}$ dialkyl ether derivatives of (poly)alkylene glycols, and tetrahydrofuran. Mixtures of the foregoing are also suitable.

Optionally a reducing agent can be employed to produce the lower oxidation state complexes. By the term "reducing agent" herein is meant a metal or compound which, under reducing conditions causes the metal M, to be reduced from a higher to a lower oxidation state. Examples of suitable metal reducing agents are alkali metals, alkaline earth metals, aluminum and zinc, alloys of alkali metals or alkaline earth metals such as sodium/mercury amalgam and sodium/potassium alloy. Examples of suitable reducing agent compounds are sodium naphthalenide, potassium graphite, lithium alkyls, lithium or potassium alkadienyls; and Grignard reagents. Most preferred reducing agents are the alkali metals or alkaline earth metals, especially lithium and magnesium metal. Suitable techniques for preparing complexes of the present invention are well known to the skilled artisan and may be readily derived from techniques taught, for example, in the previously mentioned publication, WO98/06727 (USSN 230,185, filed July 28, 1997).

The complexes are rendered catalytically active by combination with an activating cocatalyst or use of an activating technique, such as those that are previously known in the art for use with Group 4 metal olefin polymerization complexes. Suitable activating cocatalysts for use herein include polymeric or oligomeric alumoxanes, especially methylalumoxane, triisobutyl aluminum modified methylalumoxane, or isobutylalumoxane; neutral Lewis acids, such as $C_{1-30}$ hydrocarbyl substituted Group 13 compounds, especially tri(hydrocarbyl)aluminum- or tri(hydrocarbyl)boron compounds and halogenated (including perhalogenated) derivatives thereof, having from 1 to 10 carbons in each hydrocarbyl or halogenated hydrocarbyl group, more especially perfluorinated tri(aryl)boron compounds, and most especially tris(pentafluorophenyl)borane; nonpolymeric, compatible, noncoordinating, ion forming compounds (including the use of such compounds under oxidizing conditions), especially the use of ammonium-, phosphonium-, oxonium-, carbonium-, silylium- or sulfonium- salts of compatible, noncoordinating anions, or ferrocenium salts of compatible, noncoordinating anions; bulk electrolysis (explained in more detail hereinafter); and combinations of the foregoing activating cocatalysts and techniques. The foregoing activating cocatalysts and activating techniques have been previously taught with respect to different metal complexes in the following references: EP-A-277,003, US-A-5,153,157, US-A-5,064,802, US-A-5,321,106, US-A-5,721,185, US-A-5,350,723, US-A-5,425,872, US-A-5,625,087, US-A-5,883,204, US-A-5,919,983, US-A-5,783,512, WO 99/15534, and USSN 09/251,664, filed February 17, 1999.

Combinations of neutral Lewis acids, especially the combination of a trialkylaluminum compound having from 1 to 4 carbons in each alkyl group and a halogenated tri(hydrocarbyl)boron compound having from 1 to 20 carbons in each hydrocarbyl group, especially tris(pentafluorophenyl)borane, further combinations of such neutral Lewis acid mixtures with a polymeric or oligomeric alumoxane, and combinations of a single neutral Lewis acid, especially tris(pentafluorophenyl)borane with a polymeric or oligomeric alumoxane are especially desirable activating cocatalysts. Preferred molar ratios of Group 4 metal complex:tris(pentafluorophenylborane:alumoxane are from 1:1:1 to 1:10:30, more preferably from 1:1:1.5 to 1:5:10.

Suitable ion forming compounds useful as cocatalysts in one embodiment of the present invention comprise a cation which is a Bronsted acid capable of donating a proton, and a compatible, noncoordinating anion, $A^-$. As used herein, the term "noncoordinating" means an anion or substance which either does not coordinate to the Group 4 metal containing precursor complex and the catalytic derivative derived therefrom, or which is only weakly coordinated to such complexes thereby remaining sufficiently labile to be displaced by a neutral Lewis base. A noncoordinating anion specifically refers to an anion which when functioning as a charge balancing anion in a cationic metal complex does not transfer an anionic substituent or fragment thereof to said cation thereby forming neutral complexes. "Compatible anions" are anions which are not degraded to neutrality when the initially formed complex decomposes and are noninterfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, said anion should be sufficiently labile to be displaced by olefinic, diolefinic and acetylenically unsaturated compounds or other neutral Lewis bases such as ethers or nitriles. Suitable metals include, but are not limited to, aluminum, gallium, niobium or tantalum. Suitable metalloids include, but are not limited to, boron, phosphorus, and silicon. Compounds containing anions which comprise coordination complexes containing a single metal or metalloid atom are, of course, well known and many, particularly such compounds containing a single boron atom in the anion portion, are available commercially.

Preferably such cocatalysts may be represented by the following general formula:

$$(L^*\text{-}H)_d^+ \ (A)^{d-}$$

wherein:

- $L^*$ is a neutral Lewis base;
- $(L^*\text{-}H)^+$ is a conjugate Bronsted acid of $L^*$;
- $A^{d-}$ is a noncoordinating, compatible anion having a charge of d-, and
- d is an integer from 1 to 3.

More preferably $A^{d-}$ corresponds to the formula: $[M'Q_4]^-$;
wherein:

- M' is boron or aluminum in the +3 formal oxidation state; and
- Q independently each occurrence is selected from hydride, dialkylamido, halide, hydrocarbyl, hydrocarbyloxide, halo-substituted hydrocarbyl, halo-substituted hydrocarbyloxy, and halo- substituted silylhydrocarbyl radicals (including perhalogenated hydrocarbylperhalogenated hydrocarbyloxy- and perhalogenated silylhydrocarbyl radicals), said Q having up to 20 carbons with the proviso that in not more than one occurrence is Q halide. Examples of suitable hydrocarbyloxide Q groups are disclosed in U. S. Patent 5,296,433.

In a more preferred embodiment, d is one, that is, the counter ion has a single negative charge and is $A^-$. Activating cocatalysts comprising boron which are particularly useful in the preparation of catalysts of this invention may be represented by the following general formula:

$$(L^*\text{-}H)^+(BQ_4);$$

wherein:

- $L^*$ is as previously defined;
- B is boron in a formal oxidation state of 3; and
- Q is a hydrocarbyl-, hydrocarbyloxy-, fluorohydrocarbyl-, fluorohydrocarbyloxy-, hydroxyfluorohydrocarbyl-, dihydrocarbylaluminumoxyfluorohydrocarbyl-, or fluorinated silylhydrocarbyl- group of up to 20 nonhydrogen atoms, with the proviso that in not more than one occasion is Q hydrocarbyl. Most preferably, Q is each occurrence a fluorinated aryl group, especially, a pentafluorophenyl group.

Preferred Lewis base salts are ammonium salts, more preferably trialkylammonium salts containing one or more $C_{12\text{-}40}$ alkyl groups.

Illustrative, but not limiting, examples of boron compounds which may be used as an activating cocatalyst in the preparation of the improved catalysts of this invention are tri-substituted ammonium salts such as:

trimethylammonium tetralcis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
tri(sec-butyl)ammonium tetrakis(pentafluorophenyl) borate,
N,N-dimethylanilinium tetrakis(pentafluorophenyl) borate,
N,N-dimethylanilinium n-butyltris(pentafluorophenyl) borate,
N,N-dimethylanilinium benzyltris(pentafluorophenyl) borate,
N,N-dimethylanilinium tetrakis(4-(t-butyldimethylsilyl)-2, 3, 5, 6-tetrafluorophenyl) borate,
N,N-dimethylanilinium tetrakis(4-(triisopropylsilyl)-2, 3, 5, 6-tetrafluorophenyl) borate,
N,N-dimethylanilinium pentafluorophenoxytris(pentafluorophenyl) borate,
N,N-diethylanilinium tetrakis(pentanuoropbenyl) borate,
N,N-dimethyl-2,4,6-trimethylanilinium tetrakis(pentafluorophenyl) borate,
dimethyltetradecylammonium tetrakis(pentafluorophenyl) borate,
dimethylhexadecylammonium tetrakis(pentafluorophenyl) borate,
dimethyloctadecylammonium tetrakis(pentafluorophenyl) borate,
methylditetradecylammonium tetrakis(pentafluorophenyl) borate,
methylditetradecylammonium (hydroxyphenyl)tris(pentafluorophenyl) borate,
methylditetradecylammonium (diethylaluminoxyphenyl)tris(pentafluorophenyl) borate,
methyldihexadecylammonium tetrakis(pentafluorophenyl) borate,
methyldihexadecylammonium (hydroxyphenyl)tris(pentafluorophenyl) borate,
methyldihexadecylammonium (diethylaluminoxyphenyl)tris(pentafluorophenyl) borate,
methyldioctadecylammonium tetrakis(pentafluorophenyl) borate,
methyldioctadecylammonium (hydroxyphenyl)tris(pentafluorophenyl) borate,
methyldioctadecylammonium (diethylaluminoxyphenyl)tris(pentafluorophenyl) borate,

mixtures of the foregoing,
dialkyl ammonium salts such as:

di-(i-propyl)ammonium tetrakis(pentafluorophenyl) borate, methyloctadecylammonium tetrakis(pentafluorophenyl) borate, methyloctadodecylammonium tetrakis(pentafluorophenyl) borate, and dioctadecylammonium tetrakis(pentafluorophenyl) borate;
tri-substituted phosphonium salts such as:

triphenylphosphonium tetrakis(pentafluorophenyl) borate, methyldioctadecylphosphonium tetrakis(pentafluorophenyl) borate, and tri(2,6-dimethylphenyl)phosphonium tetrakis(pentafluorophenyl) borate;

di-substituted oxonium salts such as:

diphenyloxonium tetrakis(pentafluorophenyl) borate, di(o-tolyl)oxonium tetrakis(pentafluorophenyl) borate, and di(octadecyl)oxonium tetrakis(pentafluorophenyl) borate;

di-substituted sulfonium salts such as:

di(o-tolyl)sulfonium tetrak-is(pentafluorophenyl) borate, and
methylcotadecylsulfonium tetrakis(pentafluorophenyl) borate.

Preferred $(L^*-H)^+$ cations are methyldioctadecylammonium and dimethyloctadecylammonium. The use of the above Bronsted acid salts as activating cocatalysts for addition polymerization catalysts is known in the art, having been disclosed in USP 5,064,802, 5,919,983, 5,783,512 and elsewhere.

Another suitable ion forming, activating cocatalyst comprises a salt of a cationic oxidizing agent and a noncoordinating, compatible anion represented by the formula:

$$(Ox^{e+})_d(A^{d-})_e.$$

wherein:

$Ox^{e+}$ is a cationic oxidizing agent having a charge of e+;

e is an integer from 1 to 3; and
$A^{d-}$ and d are as previously defined.

Examples of cationic oxidizing agents include: ferrocenium, hydrocarbyl-substituted ferrocenium, $Ag^+$, or $Pb^{+2}$. Preferred embodiments of $A^{d-}$ are those anions previously defined with respect to the Bronsted acid containing activating cocatalysts, especially tetrakis(pentafluorophenyl)borate. The use of the above salts as activating cocatalysts for addition polymerization catalysts is known in the art, having been disclosed in USP 5,321,106.

Another suitable ion forming, activating cocatalyst comprises a compound which is a salt of a carbenium ion and a noncoordinating, compatible anion represented by the formula:

$$©^+A^-$$

wherein:

$©^+$ is a $C_{1-20}$ carbenium ion; and
$A^-$ is as previously defined. A preferred carbenium ion is the trityl cation, that is triphenylmethylium. The use of the above carbenium salts as activating cocatalysts for addition polymerization catalysts is known in the art, having been disclosed in USP 5,350,723.

A further suitable ion forming, activating cocatalyst comprises a compound which is a salt of a silylium ion and a noncoordinating, compatible anion represented by the formula:

$$R_3Si(X')_q{}^+A^-$$

wherein:

R is $C_{1-10}$ hydrocarbyl, and X', q and $A^-$ are as previously defined.
Preferred silylium salt activating cocatalysts are trimethylsilylium tetrakispentafluorophenylborate, triethylsilylium tetrakispentafluorophenylborate and ether substituted adducts thereof. The use of the above silylium salts as activating cocatalysts for addition polymerization catalysts is known in the art, having been disclosed in USP 5,625,087.

Certain complexes of alcohols, mercaptans, silanols, and oximes with tris(pentafluorophenyl)borane are also effective catalyst activators and may be used according to the present invention. Such cocatalysts are disclosed in USP 5,296,433.

Another class of suitable catalyst activators are expanded anionic compounds corresponding to the formula: $(A^{1+a^1})_{b^1}(Z^1J^1{}_{j1})^{-c^1}{}_{d^1}$,
wherein:

$A^1$ is a cation of charge $+a^1$,
$Z^1$ is an anion group of from 1 to 50, preferably 1 to 30 atoms, not counting hydrogen atoms, further containing two or more Lewis base sites;
$J^1$ independently each occurrence is a Lewis acid coordinated to at least one Lewis base site of $Z^1$, and optionally two or more such $J^1$ groups may be joined together in a moiety having multiple Lewis acidic functionality,
$j^1$ is a number from 2 to 12 and
$a^1$, $b^1$, $c^1$, and $d^1$ are integers from 1 to 3, with the proviso that a' x $b^1$ is equal to c' x $d^1$.

The foregoing cocatalysts (illustrated by those having imidazolide, substituted imidazolide, imidazolinide, substituted imidazolinide, benzimidazolide, or substituted benzimidazolide anions) may be depicted schematically as follows:

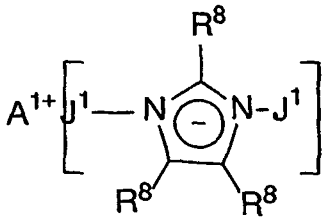, 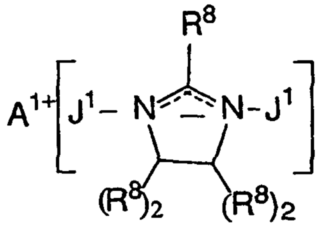 or 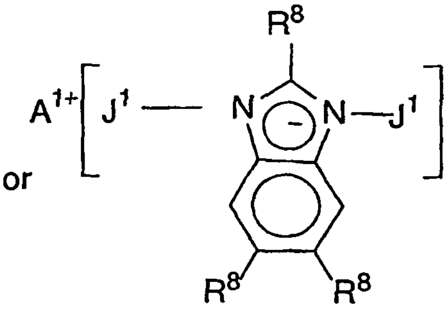,

wherein:

$A^{1+}$ is a monovalent cation as previously defined, and preferably is a trihydrocarbyl ammonium cation, containing one or two $C_{10-40}$ alkyl groups, especially the methylbis(tetradecyl)ammonium- or methylbis(octadecyl)ammonium-cation,
$R^8$, independently each occurrence, is hydrogen or a halo, hydrocarbyl, halocarbyl, halohydrocarbyl, silylhydrocarbyl, or silyl, (including mono-, di- and tri(hydrocarbyl)silyl) group of up to 30 atoms not counting hydrogen, preferably $C_{1-20}$ alkyl, and
$J^1$ is tris(pentafluorophenyl)borane or tris(pentafluorophenyl)aluminane.

Examples of these catalyst activators include the trihydrocarbylammonium-, especially, methylbis(tetradecyl) ammonium- or methylbis(octadecyl)ammonium- salts of:

bis(tris(pentafluorophenyl)borane)imidazolide,
bis(tris(pentafluorophenyl)borane)-2-undecylimidazolide, bis(tris(pentafluorophenyl)borane)-2-heptadecylimidazolide, bis(tris(pentafluorophenyl)borane)-4,5-bis(undecyl)imidazolide,
bis(tris(pentafluorophenyl)borane)-4,5-bis(heptadecyl)imidazolide,
bis(tris(pentafluorophenyl)borane)imidazolinide,
bis(tris(pentafluorophenyl)borane)-2-undecylimidazolinide, bis(tris(pentafluorophenyl)borane)-2-heptadecylimidazolinide, bis(tris(pentafluorophenyl)borane)4,5-bis(undecyl)imidazolinide,
bis(tris(pentafluorophenyl)borane)-4,5-bis(heptadecyl)imidazolinide,
bis(tris(pentafluorophenyl)borane)-5,6-dimethylbenzimidazolide,
bis(tris(pentafluorophenyl)borane)-5,6-bis(undecyl)benzimidazolide,
bis(tris(pentafluorophenyl)alumane)imidazolide,
bis(tris(pentafluorophenyl)alumane)-2-undecylimidazolide, bis(tris(pentafluorophenyl)alumane)-2-heptadecylimidazolide, bis(tris(pentafluorophenyl)alumane)-4,5-bis(undecyl)imidazolide,
bis(tris(pentafluorophenyl)alumane)-4,5-bis(heptadecyl)imidazolide,
bis(tris(pentafluorophenyl)alumane)imidazolinide,
bis(tris(pentafluorophenyl)alumane)-2-undecylimidazolinide, bis(tris(pentafluorophenyl)alumane)-2-heptadecylimidazolinide, bis(tris(pentafluorophenyl)alumane)-4,5-bis(undecyl)imidazolinide,
bis(tris(pentafluorophenyl)alumane)-4,5-bis(heptadecyl)imidazolinide,
bis(tris(pentafluorophenyl)alumane)-5,6-dimethylbenzimidazolide, and
bis(tris(pentafluorophenyl)alumane)-5,6-bis(undecyl)benzimidazolide.

A further class of suitable activating cocatalysts include cationic Group 13 salts corresponding to the formula:

$$[M''Q^1{}_2L'{}_{1'}]^+ (Ar^f{}_3M'Q^2)^-$$

wherein:

M" is aluminum, gallium, or indium;
M' is boron or aluminum;
$Q^1$ is $C_{1-20}$ hydrocarbyl, optionally substituted with one or more groups which independently each occurrence are hydrocarbyloxy, hydrocarbylsiloxy, hydrocarbylsilylamino, di(hydrocarbylsilyl)amino, hydrocarbylamino, di(hydrocarbyl)amino, di(hydrocarbyl)phosphino, or hydrocarbylsulfido groups having from 1 to 20 atoms other than hydrogen, or, optionally, two or more $Q^1$ groups may be covalently linked with each other to form one or more fused rings or ring systems;

$Q^2$ is an alkyl group, optionally substituted with one or more cycloalkyl or aryl groups, said $Q^2$ having from 1 to 30 carbons;

L' is a monodentate or polydentate Lewis base, preferably L' is reversibly coordinated to the metal complex such that it may be displaced by an olefin monomer, more preferably L' is a monodentate Lewis base;

1' is a number greater than zero indicating the number of Lewis base moieties, L', and

$Ar^f$ independently each occurrence is an anionic ligand group; preferably $Ar^f$ is selected from the group consisting of halide, $C_{1-20}$ halohydrocarbyl, and $Q^1$ ligand groups, more preferably $Ar^f$ is a fluorinated hydrocarbyl moiety of from 1 to 30 carbon atoms, most preferably $Ar^f$ is a fluorinated aromatic hydrocarbyl moiety of from 6 to 30 carbon atoms, and most highly preferably $Ar^f$ is a perfluorinated aromatic hydrocarbyl moiety of from 6 to 30 carbon atoms.

Examples of the foregoing Group 13 metal salts are alumicinium tris(fluoroaryl)borates or gallicinium tris(fluoroaryl)borates corresponding to the formula: $[M''Q^1{}_2L'{}_{1'}]+(Ar^f{}_3BQ^2)^-$, wherein M" is aluminum or gallium; $Q^1$ is $C_{1-20}$ hydrocarbyl, preferably $C_{1-8}$ alkyl; $Ar^f$ is perfluoroaryl, preferably pentafluorophenyl; and $Q^2$ is $C_{1-8}$ alkyl, preferably $C_{1-8}$ alkyl. More preferably, $Q^1$ and $Q^2$ are identical $C_{1-8}$ alkyl groups, most preferably, methyl, ethyl or octyl.

The foregoing activating cocatalysts may also be used in combination. An especially preferred combination is a mixture of a tri(hydrocarbyl)aluminum or tri(hydrocarbyl)borane compound having from 1 to 4 carbons in each hydrocarbyl group or an ammonium borate with an oligomeric or polymeric alumoxane compound.

The molar ratio of catalyst/cocatalyst employed preferably ranges from 1:10,000 to 100:1, more preferably from 1:5000 to 10:1, most preferably from 1:1000 to 1:1. Alumoxane, when used by itself as an activating cocatalyst, is employed in large quantity, generally at least 100 times the quantity of metal complex on a molar basis. Tris(pentafluorophenyl)borane, where used as an activating cocatalyst is employed in a molar ratio to the metal complex of form 0.5: 1 to 10:1, more preferably from 1:1 to 6:1 most preferably from 1: to 5:1. The remaining activating cocatalysts are generally employed in approximately equimolar quantity with the metal complex.

The catalysts and processes herein are especially suited for use in preparation of terpolymers of ethylene, propylene and a nonconjugated diene, such as, for example, EPDM terpolymers.

Preferred monomers include a combination of ethylene and one or more comonomers selected from monovinyl aromatic monomers, 4-vinylcyclohexene, vinylcyclohexane, norbomadiene, ethylidene-norbornene, $C_{3-10}$ aliphatic $\alpha$-olefins (especially propylene, isobutylene, 1-butene, 1-hexene, 3-methyl-1-pentene, 4-methyl-1-pentene, and 1-octene), and $C_{4-40}$ dienes. Most preferred monomers are mixtures of ethylene, styrene and a nonconjugated diene, especially ethylidenenorbornene or 1,4-hexadiene, and mixtures of ethylene, propylene and a nonconjugated diene, especially ethylidenenorbornene or 1,4-hexadiene.

In general, the polymerization may be accomplished at conditions well known in the prior art for Ziegler-Natta or Kaminsky-Sinn type polymerization reactions, that is, temperatures from 0-250°C, preferably 30 to 200°C and pressures from atmospheric to 10,000 atmospheres. Suspension, solution, slurry, gas phase, solid state powder polymerization or other process condition may be employed if desired. A support, especially silica, alumina, or a polymer (especially poly(tetrafluoroethylene) or a polyolefin) may be employed, and desirably is employed when the catalysts are used in a gas phase polymerization process. The support is preferably employed in an amount to provide a weight ratio of catalyst (based on metal):support from $1:10^6$ to $1:10^3$, more preferably from $1:10^6$ to $1:10^4$.

In most polymerization reactions the molar ratio of catalyst:polymerizable compounds employed is from $10^{-12}$: 1 to $10^{-1}$:1, more preferably from $10^{-9}$:1 to $10^{-5}$:1.

Suitable solvents use for solution polymerization are liquids that are substantially inert under process conditions encountered in their usage. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; perfluorinated hydrocarbons such as perfluorinated $C_{4-10}$ alkanes, and alkyl-substituted aromatic compounds such as benzene, toluene, xylene, and ethylbenzene. Suitable solvents also include liquid olefins which may act as monomers or comonomers.

The catalysts may be utilized in combination with at least one additional homogeneous or heterogeneous polymerization catalyst in the same reactor or in separate reactors connected in series or in parallel to prepare polymer blends having desirable properties. An example of such a process is disclosed in WO 94/00500.

The catalyst composition may be prepared as a homogeneous catalyst by addition of the requisite components to a solvent or diluent in which polymerization will be conducted. The catalyst composition may also be prepared and employed as a heterogeneous catalyst by adsorbing, depositing or chemically attaching the requisite components on an inorganic or organic particulated solid. Examples of such solids include, silica, silica gel, alumina, clays, expanded clays (aerogels), aluminosilicates, trialkylaluminum compounds, and organic or inorganic polymeric materials, especially polyolefins. In a preferred embodiment, a heterogeneous catalyst is prepared by reacting an inorganic compound, preferably a tri($C_{1-4}$ alkyl)aluminum compound, with an activating cocatalyst, especially an ammonium salt of a hydroxyaryl(trispentafluorophenyl)borate, such as an ammonium salt of (4-hydroxy-3,5-ditertiarybutylphenyl)tris-(pentafluorophenyl)borate or (4-hydroxyphenyl)-tris(pentafluorophenyl)borate. This activating cocatalyst is deposited onto the support by coprecipitating, imbibing, spraying, or similar technique, and thereafter removing any solvent or diluent. The metal complex is added to the support, also by adsorbing, depositing or chemically attaching the same to the support, either subsequently, simultaneously or prior to addition of the activating cocatalyst.

When prepared in heterogeneous or supported form, the catalyst composition is employed in a slurry or gas phase polymerization. As a practical limitation, slurry polymerization takes place in liquid diluents in which the polymer product is substantially insoluble. Preferably, the diluent for slurry polymerization is one or more hydrocarbons with less than 5 carbon atoms. If desired, saturated hydrocarbons such as ethane, propane or butane may be used in whole or part as the diluent. Likewise, the α-olefin monomer or a mixture of different α-olefin monomers may be used in whole or part as the diluent. Most preferably, at least a major part of the diluent comprises the α-olefin monomer or monomers to be polymerized. A dispersant, particularly an elastomer, may be dissolved in the diluent utilizing techniques known in the art, if desired.

At all times, the individual ingredients as well as the recovered catalyst components must be protected from oxygen and moisture. Therefore, the catalyst components and catalysts must be prepared and recovered in an oxygen and moisture free atmosphere. Preferably, therefore, the reactions are performed in the presence of an dry, inert gas, such as, for example, nitrogen.

The polymerization may be carried out as a batchwise or a continuous polymerization process. A continuous process is preferred, in which event catalyst, ethylene, comonomer, and optionally solvent, are continuously supplied to the reaction zone, and polymer product continuously removed therefrom.

Without limiting in any way the scope of the invention, one means for carrying out such a polymerization process is as follows: In a stirred-tank reactor, the monomers to be polymerized are introduced continuously, together with solvent and an optional chain transfer agent. The reactor contains a liquid phase composed substantially of monomers, together with any solvent or additional diluent and dissolved polymer. If desired, a small amount of a "H"-branch inducing diene such as norbornadiene, 1,7-octadiene or 1,9-decadiene may also be added. Catalyst and cocatalyst are continuously introduced in the reactor liquid phase. The reactor temperature and pressure may be controlled by adjusting the solvent/monomer ratio, the catalyst addition rate, as well as by cooling or heating coils, jackets or both. The polymerization rate is controlled by the rate of catalyst addition. The ethylene content of the polymer product is determined by the ratio of ethylene to comonomer in the reactor, which is controlled by manipulating the respective feed rates of these components to the reactor. The polymer product molecular weight is controlled, optionally, by controlling other polymerization variables such as the temperature, monomer concentration, or by the previously mention chain transfer agent, such as a stream of hydrogen introduced to the reactor, as is well known in the art. The reactor effluent is contacted with a catalyst kill agent such as water. The polymer solution is optionally heated, and the polymer product is recovered by flashing off gaseous monomers as well as residual solvent or diluent at reduced pressure, and, if necessary, conducting further devolatilization in equipment such as a devolatilizing extruder. In a continuous process the mean residence time of the catalyst and polymer in the reactor generally is from about 5 minutes to 8 hours, and preferably from 10 minutes to 6 hours.

## EXAMPLES

It is understood that the present invention is operable in the absence of any component which has not been specifically disclosed. The following examples are provided in order to further illustrate the invention and are not to be construed as limiting. Unless stated to the contrary, all parts and percentages are expressed on a weight basis. The term "overnight", if used, refers to a time of approximately 16-18 hours, "room temperature", if used, refers to a temperature of about 20-25 °C, and "mixed alkanes" refers to a mixture of hydrogenated propylene oligomers, mostly $C_6$-$C_{12}$ isoalkanes, available commercially under the trademark Isopar E™ from Exxon Chemicals Inc. HRMS refers to high resolution mass spectroscopy.

All solvents were purified using the technique disclosed by Pangborn et al, Organometallics, 15, 1518-1520, (1996). All compounds, solutions, and reactions were handled under an inert atmosphere (dry box). $^1H$ and $^{13}C$ NMR shifts were referenced to internal solvent resonances and are reported relative to TMS.

X-ray analysis was performed in the following manner.

Data Collection: A single crystal of suitable dimensions was immersed in oil, Paratone N™, available from Exxon Chemicals, Inc., and mounted on a thin glass fiber. The crystal was transferred to a Bruker SMART PLATFORM diffractometer equipped with a graphite monochromatic crystal, a MoKα radiation source (λ = 0.71073 Å), and a CCD (charge coupled device) area detector. The crystal was bathed in a cold nitrogen stream for the duration of data collection (-100° C).

Program SMART (available from Bruker AXS, Inc., Madison, Wisconsin, USA) was used for diffractometer control, frame scans, indexing, orientation matrix calculations, least squares refinement of cell parameters, crystal faces measurements and the actual data collection. Program ASTRO (available from Bruker AXS, Inc., Madison, Wisconsin, USA) was used to set up data collection strategy.

Raw data frames were read by program SAINT (available from Bruker AXS, Inc., Madison, Wisconsin, USA) and integrated using 3D profiling algorithms. The resulting data were reduced to produce hkl reflections and their intensities and estimated standard deviations. The data were corrected for Lorentz and polarization effects. Sufficient reflections were collected to represent a range of 1.51 to 2.16 redundancy level with an $R_{sym}$ value range of 2.5 percent, at the lowest $2\theta$ shell of reflections, to 3.0 percent at the highest $2\theta$ shell of reflections (55°). Crystal decay correction was applied and was less than 1 percent. The unit cell parameters were refined by least squares of the setting angles of the reflections.

Absorption corrections were applied by integration based on indexed measured faces. Data preparation was carried out using program XPREP (available from Bruker AXS, Inc., Madison, Wisconsin, USA). The structure was solved by direct methods in SHELXTL5.1 (available from Bruker AXS, Inc., Madison, Wisconsin, USA) from which the positions of all of the non-H atoms were obtained. The structure was refined, also in SHELXTL5.1, using full-matrix least-squares refinement. The non-H atoms were refined with anisotropic thermal parameters and all of the H atoms were calculated in idealized positions and refined riding on their parent atoms, or were obtained from a Difference Fourier map and refined without any constraints. A correction for secondary extinction was not applied. The final refinement was carried out using $F^2$ rather than F values. $R_1$ is calculated to provide a reference to the conventional R value but its function is not minimized. Additionally, $wR_2$ is the function that is minimized, and not $R_1$.

The linear absorption coefficient, atomic scattering factors and anomalous-dispersion corrections were calculated from values from the International Tables for X-ray Crystallography (1974). Vol. IV, p. 55. Birmingham: Kynoch Press (Present distributor, D. Reidel, Dordrecht.).

Relevant functions:

$$R_1 = \sum(||F_o| - |F_c||) / \sum|F_o|$$

$$wR_2 = [\sum w(F_o^2 - F_c^2)^2] / \sum[wF_o^{22}]]^{1/2}$$

$$R_{int.} = \sum F_o^2 - F_o^2(mean)|^2 / \sum[F_o^2]$$

$S = [\sum w(F_o^2 - F_c^2)^2] / (n-p)]^{1/2}$ where n is the number of reflections and p is the total number of parameters refined

$$w = 1/[\sigma^2(F_o^2)+(0.0370*p)^2+0.31*p],\ p = [\max(F_o^2,0)+ 2* F_c^2]/3$$

**Example 1 Preparation of (N-(1,1-dimethylethyl)-1,1-di(4-methylphenyl)-1-((1,2,3,3a,7a-η)-2-methyl4-phenyl-1H-inden-1-yl)silanaminato-(2-)-N-)titanium dichloride.**

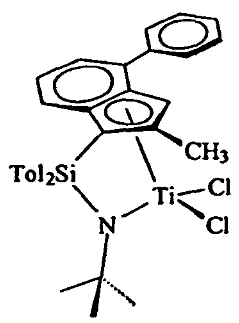

**(A) 2-methyl-4-phenyl indenyl lithium In a 400 mL jar were placed 10.6 g (51.4** mmoles) of 2-methyl-4-phenyl indene and 200 mL of hexanes. Then, 33 mL of a 1.6 M hexane solution of butyl lithium (52.4 mmoles) were added at room temperature; the mixture was stirred overnight. The precipitate was filtered and washed with hexane and dried to give 10.60 (97 percent) of a pale yellow solid.

**(B) di(tolyl)(t-butylamido)chlorosilane** To a vigorously stirred solution of di(p-tolyl)dichlorosilane (7.5 g, 27 mmoles) in 180 mL of hexane, was added a solution of tert-butyl amine in 30 mL of hexane (3.9 g, 53.3 mmoles) over a period of five minutes followed by stirring of the mixture overnight. The mixture was filtered and the filtrate dried under reduced pressure to give 4.7 grams (55 percent yield) of the desired product.
$^1$H NMR ($C_6D_6$); δ 7.8(d, 4H), 7.0 (d, 4H), 2.0 (s, 6 H), 1.55 (s, 1H), 1.1 (s, 9H).
$^{13}$C {$^1$H} NMR ($C_6D_6$): δ 140.4, 135.1, 132.7, 129.0, 50.8, 33.2, 21.4.

(**C) di(tolyl)(t-butylamido)(triflate)silane** To a mixture of 6.4 g (25 mmoles) of silver triflate in 100 mL of acetonitrile was added over a period of five minutes a solution of the di(tolyl)t-butylamidochlorosilane dissolved in 80 mL of acetonitrile. A white precipitate formed immediately. The mixture was stirred for one hour and decanted, after which the volatiles were removed. The residue was treated with hexane, filtered and the volatiles were removed to leave 9.64 g (95 percent yield) of a pale yellow viscous oil.
$^1$H NMR ($CDCl_3$): δ 7.58 (d, 4H), 7.2 (d, 4H), 2.4 (s, 6H), 2.2 (s, 1H), 1.24 (s, 9H);
$^{13}$C {$^1$H} NMR ($C_6D_6$): δ 141.7, 134.7, 129.1, 127.0, 50.9, 33.0, 21.6;
$^{19}$F NMR ($CDCl_3$): -77.0 δ ($CCl_3F$ = 0 δ).

**(D) (2-Methyl-4-phenyl inden-1-yl)-N-(1,1-dimethylethyl) bis(tolyl) silanamine** To a mixture of di(tolyl)(t-butylamido)(triflate)silane (9.64 g, 22.3 mmoles) in 60 mL of THF was added a solution of 2-methyl-4-phenylindenyl lithium (5.0 g, 23.5 mmoles; 5 percent molar excess) in 100 mL of THF. The mixture was stirred for one hour at room temperature, the volatiles were removed under reduced pressure, and the residue was extracted with hexanes and filtered. The filtrate was dried in vacuo to give 11.5 g (105 percent) of a very viscous, sticky pale orange oil. THF was still evident by NMR analysis.

**(E) (2-Methyl-4-phenylinden-1-yl)-N-(1,1-dimethylethyl)di(tolyl)silanamidetitanium dichloride also referred to as (N-(1,1-dimethylethyl)-1,1-di(4-methylphenyl)-1-((1,2,3,3a,7a-η)-2-methyl-4-phenyl-1H-inden-1-yl) silanaminato-(2-)-N-)titanium** dichloride In a 500 mL glass jar were placed 10.76 g (22.0 mmoles) of (2-methyl-4-phenylinden-1-yl)-N-(1,1-dimethylethyl)di(tolyl)silanamine, 300 mL of hexane, and then 28.2 mL of a 1.6 M hexane solution of BuLi (2.04 equiv., 45 mmoles) were added. The mixture was stirred for two hours, about 2/3 of the solvent was removed and then 200 mL of THF were added to the mixture. Then 8.2 g (22.0 mmoles) of $TiCl_3$•3THF was added; the mixture was stirred for thirty minutes, followed by addition of $PbCl_2$ (4.2 g, 1.3 electron equivalents), and 10 mL of $CH_2Cl_2$. After thirty minutes the volatiles were removed in vacuo, the residue repeatedly extracted with hexane, and the extracts filtered. The filtrate was dried to give 5.0 g (37 percent) of a dark orange-red solid.
$^1$H NMR ($C_6D_6$): δ 7.8 (d), 7.6 (d), 7.2 (m), 7.1 (br s), 7.05 (m), 6.8 (m), 2.1 (s, 6H), 1.95 (s, 3H), 1.65 (s, 9H).

**Example 2 Preparation of (N-(1,1-dimethylethyl)-1,1-di(4-methylphenyl)-1-((1,2,3,3a,7a-η)-2-methyl-4-phenyl-1H-inden-1-yl)silanaminato-(2-)-N-)titanium dimethyl** In a 50 mL jar were placed 0.54 g (0.9 mmoles) of (N-(1,1- dimethylethyl)- 1,1- di (4- methylphenyl)- 1-((1,2,3,3a, 7a- η)- 2- methyl- 4- phenyl- 1H- inden- 1- yl) silanaminato-(2-)-N-)titanium dichloride and 20 mL of ether. Then, 0.6 mL of a 3 M diethylether solution of methyl magnesium iodide (1.8 mmoles) were added and the mixture was stirred for one hour. The volatiles were removed under reduced pressure and the residue (0.3 g) was redissolved in hexane, filtered and the filtrate dried again; this process (redissolve-filter-dry) was repeated three times to remove insoluble material. The semi-solid residue was treated with about 0.3 mL of ether, and the ether was quickly removed under reduced pressure to give a brownish-golden glassy solid (0.22 g, 43 precent yield).
$^1$H NMR ($C_6D_6$): δ 7.9 (d), 7.75 (d), 7.6 (d), 7.2 (m), 7.1 (br s), 7.05 (m), 6.8 (m), 2.1 (s, 3H), 2.08 (s, 3H), 1.8 (s, 3H), 1.75 (s, 9H), 1.0 (s, 3H), 0.2 (s, 3H).
$^{13}$C {$^1$H} NMR ($C_6D_6$): δ 142.9, 141.0, 139.9, 139.5, 138.7, 137.0, 136.0, 135.2, 135.0, 134.5, 131.0, 129.0, 128.9, 128.6, 127.74, 127.67, 127.3, 125.6, 125.4, 116.0, 89.9, 66.5, 57.9, 57.7, 53.4, 35.0, 34.8, 31.8, 25.5, 22.9, 21.4, 20.7, 19.0, 14.2, 13.9.

**Ethylene/ 1-Octene/Ethylidenenorbornene Polymerization Conditions**

All liquid except ethylidenenorbornene (ENB) and gas feeds were passed through columns of alumina and a decontaminant (Q-5™ catalyst available from Englehardt Chemicals Inc.) prior to introduction into the reactor. ENB was passed through a short column (3x10 cm) of alumina prior to introduction to the reactor. Catalyst components are handled

in a glovebox containing an atmosphere of argon or nitrogen. A stirred 2.0 liter reactor is charged with about 640 g of mixed alkanes solvent, 150 g of 1-octene and 16 g of ENB. Hydrogen (20 psi, 140 kPa) is added as a molecular weight control agent by differential pressure expansion from a 75 mL addition tank. The reactor is heated to 100 °C and saturated with ethylene at 500 psig (3.5 MPa). Metal complex as dilute toluene solution and cocatalyst as dilute solutions in toluene were mixed in a 1:1 molar ratio and transferred to a catalyst addition tank and injected into the reactor. The cocatalyst was methyldi(octadecyl)ammonium tetrakis(pentafluoro-phenyl)borate, the ammonium cation of which is derived from a mixture of amines available commercially as methyl bis(tallow)amine. The polymerization conditions were maintained for 15 minutes with ethylene added on demand. The resulting solution was removed from the reactor, quenched with isopropyl alcohol, and stabilized by addition of a toluene solution containing about 67 mg/100g polymer of a hindered phenol antioxidant (Irganox™ 1010 from Ciba Geigy Corporation) and about 133 mg/100g polymer of a phosphorus stabilizer (Irgafos 168 from Ciba Geigy Corporation).

Between sequential polymerization runs, a wash cycle was conducted in which 850 g of mixed alkanes was added to the reactor and the reactor was heated to 130 °C. The reactor was then emptied of the heated solvent immediately before beginning a new polymerization run.

Polymers were recovered by drying in a vacuum oven set at 140 °C for about 20 hours. Density values are derived by determining the polymer's mass when in air and when immersed in methylethyl ketone. GPC results are determined by standard methods and are reported relative to a polystyrene/polyethylene universal calibration. The percent ethylene, octene and ENB for the polymer were determined by $^{13}C$ NMR analysis of the material. Results are contained in Table 1.

Table 1

| Run | Catalyst (μmol) | Yield (g) | Eff.[1] | Density (g/ml) | Mw ($x10^3$) | Mw/Mn | Percent octene | Percent ENB |
|---|---|---|---|---|---|---|---|---|
| 6 | Ex. 2 (0.95) | 33.2 | 0.73 | 0.860 | 407 | 2.3 | 41 | 2.5 |
| B* | ID[2] (1.0) | 59.1 | 1.23 | 0.874 | 317 | 2.0 | 33 | 2.8 |

[1] efficiency, g polymer/ μg titanium

[2] dimethyl (N-(1,1- dimethylethyl)- 1,1- dimethyl- 1-(2,3,4,5-tetramethylcyclopentadienyl)-silanaminato titanium

* comparative, not an example of the invention

## Claims

**1.** A process for polymerizing ethylene, at least one diene, and optionally a $C_{3-12}$ α-olefin by contacting a mixture thereof with a metal complex and an activating cocatalyst under addition polymerization conditions and recovering the resulting polymer product, wherein the metal complex corresponds to the formula :

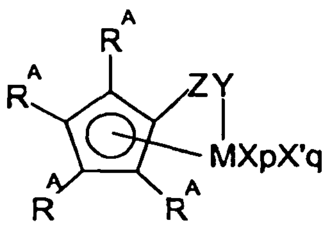

(I)

where M is a Group 4 metal that is in the +2, +3 or +4 formal oxidation state;

$R^A$ independently each occurrence is hydrogen, or a hydrocarbyl, halohydrocarbyl, hydrocarbyloxyhydrocarbyl, dihydrocarbylaminohydrocarbyl, dihydrocarbylamino, hydrocarbyloxy, hydrocarbylsilyl, or trihydrocarbylsilylhydrocarbyl group of from 1 to 80 atoms, not counting hydrogen, and two $R^A$ groups are covalently linked together,

Z is $(R^D)_2Si=$, wherein $R^D$ independently each occurrence is $C_{7-20}$ alkaryl or two $R^D$ groups together are alkyl-or polyalkyl-substituted arylene of up to 40 carbons; and

Y is bonded to M and Z and is selected from the group consisting of-O-,-S-,-$NR^E$-, and-$PR^E$- ; wherein, $R^E$ independently each occurrence is hydrogen, or a member selected from hydrocarbyl, hydrocarbyloxy, silyl, halogenated alkyl, halogenated aryl, and combinations thereof, said $R^E$ having up to 20 nonhydrogen atoms

X is an anionic or dianionic ligand group having up to 60 atoms exclusive of the class of ligands that are cyclic, delocalized, π-bound ligand groups;

X' independently each occurrence is a neutral ligand having up to 40 atoms;
p is zero, 1 or 2, and is two less than the formal oxidation state of M when X is an anionic ligand, and when X is a dianionic ligand group, p is I ; and
q is zero, I or 2
**characterized in that**

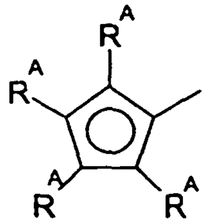

is a 2-alkyl-4-arylinden-1-yl group of up to 30 total carbon atoms.

2. A process according to Claim 1, wherein the 2-alkyl-4-arylinden-1-yl group is 2-methyl-4-phenylinden-1- yl group.

3. A process according to Claim 1, wherein the 2-alkyl-4-arylinden-1-yl group is a 2-methyl-4-naphthylinden-1-yl group.

4. A process according to any one of the preceding claims, wherein M is titanium.

5. A process according to Claim 4, wherein the metal complex corresponds to the formula:

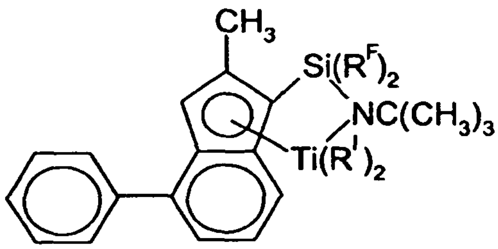

where $R^F$ is $C_{1-10}$ alkyl substituted phenyl; and
$R^1$ is chloro, methyl, benzyl, trimethylsilylmethyl or two $R^1$ groups together are (dimethylsilylene)bis(methylene).

6. A process according to Claim 4, wherein the metal complex corresponds to the formula:

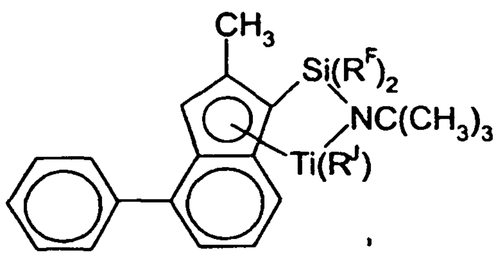

,

where $R^F$ is $C_{1-10}$ alkyl substituted phenyl; and
$R^J$ is allyl, 2- (dimethylamino) benzyl, 1,4-pentadiene or 1, 4-diphenyl-1, 3-butadiene.

7. A process according to Claim 5 or Claim 6, wherein $R^F$ is $C_{4-10}$ alkyl substitute phenyl.

8. A process according to Claim 5 or Claim 6, wherein $R^F$ is n-butyl substituted phenyl.

**9.** A process according to Claim 5 or Claim 6, wherein $R^F$ is p-n-butylphenyl.

**10.** A process according to Claim 1, wherein the metal complex is selected from the group consisting of:

dichloro(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium;
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium dimethyl;
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium bis(trimethylsilylmethyl);
(N-(1,1-dimethylethyl)-1,1-di(4-n-butylphenyl)-1-((1,2,3,3a,7a-η)-2-methyl-4-phenyl-1H-inden-1-yl)silanaminato-(2-)-N-)-titanium dimethylsilylene)bis(methylene);
(N-(1,1-dimethylethyl)-1,1-di(4-n-butylphenyl-1-((1,2,3,3a,7a-η)-2-methyl-4-phenyl-1H-inden-1-yl)silanaminato-(2-)-N-)-titanium (III) 2-(N,N-dimethylamino)benzyl;
(N-(1,1-dimethylethyl)-1,1-di(4-n-butylphenyl)-1-((1,2,3,3a,7a-η)-2-methyl-4-phenyl- H-inden-1-yl)silanaminato-(2-)-N-)-titanium(II) 1,4-diphenyl-1,3-butadiene;
dichloro(N-(cyclohexyl)-1,1-di(4-n-butylphenyl)-1-((1,2,3,3a,7a-η))-2-methyl-4-phenyl-1H-inden-1-yl)silanaminato-(2-)-N-)-titanium;
(N-(cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titanium dimethyl;
(N-(cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titanium bis(trimethylsilylmethyl);
(N-(cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titanium (dimethylsilylene)bis(methylene);
(N-(cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titanium(III) 2-(N,N-dimethylamino)benzyl;
(N-(cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titanium(II) 1,4-diphenyl-1,3-butadiene;
dichloro(N-(1,1-dimethylethyl)-1,1-di(4-methylphenyl)-1-((1,2,3,3a,7a-η)-2-methyl-4-phenyl-1H-inden-1-yl)silanaminato-(2-)-N-)-titanium;
(N-(1,1-dimethylethyl)-1,1-di(4-methylphenyl)-1-((1,2,3,3a,7a-η))-2-methyl-4-phenyl-1H-inden-1-yl)silanaminato-(2-)-N-)-titanium dimethyl;
(N-(1,1-dimethylethyl)-1,1-di(4-methylphenyl)-1-((1,2,3,3a,7a-η)-2-methyl-4-phenyl-1H-inden-1-yl)silanaminato-(2-)-N-)-titanium bis(trimethylsilylmethyl);
(N-(1,1-dimethylethyl)-1,1-di(4-methylphenyl)-1-((1,2,3,3a,7a-η)-2-methyl-4-phenyl-1H-inden-1-yl)silanaminato-(2-)-N-)-titanium (dimethylsilylene)bis(methylene);
(N-(1,1-dimethylethyl)-1,1-di(4-methylphenyl)-1-((1,2,3,3a,7a-η)-2-methyl-4-phenyl-1H-inden-1-yl)silanaminato-(2-)-N-)-titanium(III) 2-(N,N-dimethylamino)benzyl;
(N-(1,1-dimethylethyl)-1,1-di(4-methylphenyl)-1-((1,2,3,3a,7a-η)-2-methyl-4-phenyl-1 H-inden-1-yl)silanaminato-(2-)-N-)-titanium(II) 1,4-diphenyl-1,3-butadiene;
dichloro(N-(cyclohexyl)-1,1-di(4-methylphenyl)-1-((1,2,3,3a,7a-η)-2-methyl-4-phenyl-1H-inden-1-yl)silanaminato-(2-)-N-)-titanium;
(N-(cyclohexyl)-1,1-di(4-methylphenyl)-1-((1,2,3,3 a,7a-η)-2-methyl-4-phenyl-1H-inden-1-yl)silanaminato-(2-)-N-)-titanium dimethyl;
(N-(cyclohexyl)-1,1-di(4-methylphenyl)-1-((1,2,3,3 a,7a-η)-2-methyl-4-phenyl-1H-inden-1-yl)silanaminato-(2-)-N-)-titanium bis(trimethylsilylmethyl);
(N-(cyclohexyl)-1,1-di(4-methylphenyl)-1-((1,2,3,3 a,7a-η)-2-methyl-4-phenyl-1H-inden-1-yl)silanaminato-(2-)-N-)-titanium (dimethylsilylene)bis(methylene);
(N-(cyclohexyl)-1,1-di(4-methylphenyl)-1-((1,2,3,3 a,7a-η)-2-methyl-4-phenyl-1H-inden-1-yl)silanaminato-(2-)-N-)-titanium(III) 2-(N,N-dimethylamino)benzyl; and
(N-(cyclohexyl)- 1,1- di (4- methylphenyl)- 1-((1,2,3,3a, 7a- η)- 2- methyl- 4- phenyl- 1H- inden- 1- yl) silanaminato-(2-)-N-)-titanium(II) 1,4-diphenyl-1,3-butadiene.

**11.** A process according to any one of the preceding claims, wherein the diene is a conjugated or polycyclic diene.

**12.** A process according to Claim 11, wherein the diene is ethylidene norbomene.

**Patentansprüche**

1. Ein Verfahren zum Polymerisieren von Ethylen, wenigstens einem Dien und optional einem $C_{3-12}$-α-Olefin durch In-Kontakt-Bringen einer Mischung daraus mit einem Metallkomplex und einem aktivierenden Cocatalysator unter Additionspolymerisationsbedingungen und Gewinnen des sich ergebenden Polymerprodukts, wobei der Metallkomplex der Formel entspricht:

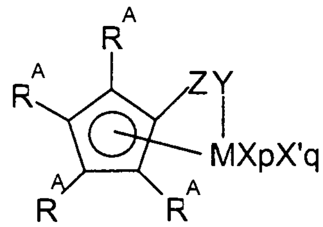

(I)

worin M ein Gruppe-4-Metall ist, das in der formalen Oxidationsstufe +2, +3 oder +4 vorliegt;
$R^A$ unabhängig voneinander bei jedem Auftreten Wasserstoff oder eine Hydrocarbyl-, Halogenhydrocarbyl-, Hydrocarbyloxyhydrocarbyl-, Dihydrocarbylaminohydrocarbyl-, Dihydrocarbylamino-, Hydrocarbyloxy-, Hydrocarbylsilyl- oder Trihydrocarbylsilylhydrocarbyl-Gruppe mit 1 bis 80 Atomen ist, wobei Wasserstoff nicht gezählt wird, und zwei $R^A$-Gruppen kovalent miteinander verbunden sind;
Z gleich $(R^D)_2Si$= ist, worin $R^D$ unabhängig bei jedem Auftreten $C_{7-20}$-Alkaryl ist oder zwei $R^D$-Gruppen zusammen alkyl- oder polyalkylsubstituiertes Arylen mit bis zu 40 Kohlenstoffatomen bilden und
Y an M und Z gebunden ist und ausgewählt ist aus der Gruppe, bestehend aus -O-, -S-, $-NR^E-$ und $-PR^E-$, wobei $R^E$ unabhängig bei jedem Auftreten Wasserstoff oder ein Mitglied, ausgewählt aus Hydrocarbyl, Hydrocarbyloxy, Silyl, halogeniertem Alkyl, halogeniertem Aryl und Kombinationen daraus ist, wobei dieses $R^E$ bis zu 20 Nichtwasserstoffatome hat;
X eine anionische oder dianionische Ligandengruppe mit bis zu 60 Atomen ist, ausschließlich der Klasse von Liganden, die cyclische π-gebundene Ligandengruppen mit delokalisierten Elektronen sind;
X' unabhängig bei jedem Auftreten ein neutraler Ligand mit bis zu 40 Atomen ist;
p gleich Null, 1 oder 2 ist und zwei kleiner als die formale Oxidationsstufe von M ist, wenn X ein anionischer Ligand ist, und wenn X eine dianionische Ligandengruppe ist, p gleich 1 ist; und
q gleich null, 1 oder 2 ist,
**dadurch gekennzeichnet, dass**

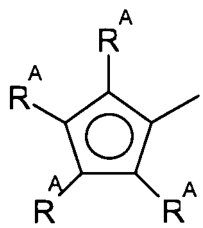

eine 2-Alkyl-4-aryliden-1-yl-Gruppe mit bis zu insgesamt 30 Kohlenstoffatomen ist.

2. Ein Verfahren gemäß Anspruch 1, wobei die 2-Alkyl-4-aryliden-1-yl-Gruppe eine 2-Methyl-4-phenyliden-1-yl-Gruppe ist.

3. Ein Verfahren gemäß Anspruch 1, wobei die 2-Alkyl-4-aryliden-1-yl-Gruppe eine 2-Methyl-4-naphthyliden-1-yl-Gruppe ist.

4. Ein Verfahren gemäß einem der vorhergehenden Ansprüche, wobei M Titan ist.

5. Ein Verfahren gemäß Anspruch 4, wobei der Metallkomplex der Formel entspricht:

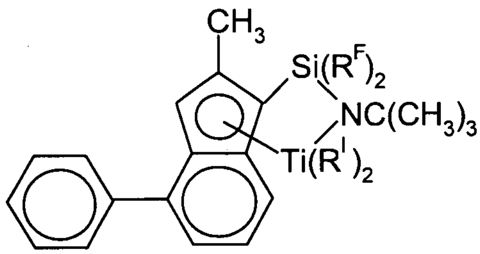

worin $R^F$ ein $C_{1-10}$-alkylsubstituiertes Phenyl ist und
$R^1$ gleich Chlor, Methyl, Benzyl, Trimethylsilylmethyl ist oder zwei $R^1$-Gruppen zusammen (Dimethylsilylen)bis(methylen) sind.

**6.** Ein Verfahren gemäß Anspruch 4, wobei der Metallkomplex der Formel entspricht:

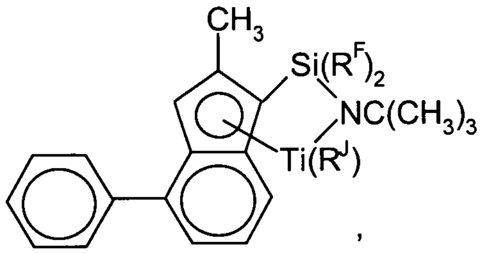

,

worin $R^F$ ein $C_{1-10}$-alkylsubstituiertes Phenyl ist und
$R^J$ gleich Allyl, 2-(Dimethylamino)benzyl, 1,4-Pentadien oder 1, 4-Diphenyl-1,3-butadien ist.

**7.** Ein Verfahren gemäß Anspruch 5 oder 6, wobei $R^F$ ein $C_{4-10}$-alkylsubstituiertes Phenyl ist.

**8.** Ein Verfahren gemäß Anspruch 5 oder 6, wobei $R^F$ ein n-butylsubstituiertes Phenyl ist.

**9.** Ein Verfahren gemäß Anspruch 5 oder 6, wobei $R^F$ gleich p-n-Butylphenyl ist.

**10.** Ein Verfahren gemäß Anspruch 1, wobei der Metallkomplex ausgewählt ist aus der Gruppe bestehend aus:

Dichloro(N-(1,1-dimethylethyl)-1,1-di(4-n-butylphenyl)-1-((1,2,3,3a,7a-η)-2-methyl-4-phenyl-1 H-inden-1-yl) silanaminato-(2-)-N-)-titan;
(N-(1,1-Dimethylethyl)-1,1-di(4-n-butylphenyl)-1,((1,2,3,3a,7a-η)-2-methyl-4-phenyl-1 H-inden-1-yl)silanaminato-(2-)-N-)-titan-dimethyl;
(N-(1,1-Dimethylethyl)-1,1-di(4-n-butylphenyl)-1-((1,2,3,3a,7a-η)-2-methyl-4-phenyl-1H-inden-1-yl)silanaminato-(2-)-N-)-titan-bis(trimethylsilylmethyl);
(N-(1,1-Dimethylethyl)-1,1-di(4-n-butylphenyl)-1-((1,2,3,3a,7a-η)-2-methyl-4-phenyl-1H-inden-1-yl)silanaminato-(2-)-N-)-titandimethylsilylen)bis(methylen);
(N-(1,1-Dimethylethyl)-1,1-di(4-n-butylphenyl-1-((1,2,3,3a,7a-η)-2-methyl-4-phenyl-1H-inden-1-yl)silanaminato-(2-)-N-)-titan(III)-2-(N,N-dimethylamino)benzyl;
(N-(1,1-Dimethylethyl)-1,1-di(4-n-butylphenyl)-1-((1,2,3,3a,7a-η)-2-methyl-4-phenyl-1H-inden-1-yl)silanaminato-(2-)-N-)-titan(11)-1,4-diphenyl-1,3-butadien;
Dichloro(N-(cyclohexyl)-1,1-di(4-n-butylphenyl)-1-((1,2,3,3a,7a-η)-2-methyl-4-phenyl-1H-inden-1-yl)silanaminato-(2-)-N-)-titan;
(N-(Cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titan-dimethyl;
(N-(Cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titan-bis(trimethylsilylmethyl);
(N-(Cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titan-(dimethylsilylen)bis(methylen);

(N-(Cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titan(III)-2-(N,N-dimethylamino)benzyl;
(N-(Cyclohexyl)- 1,1- di (4- n- butylphenyl)- 1-((1,2,3,3a, 7a- η)- 2- methyl- 4- phenyl- 1H- inden- 1- yl) silanaminato-(2-)-N-)-titan(II)-1,4-diphenyl-1,3-butadien;
Dichloro(N-(1,1-dimethylethyl)-1,1-di(4-methylphenyl)-1-((1,2,3,3a,7a-η)-2-methyl-4-phenyl-1H-inden-1-yl) silanaminato-(2-)-N-)-titan;
(N-(1,1-Dimethylethyl)-1,1-di(4-methylphenyl)-1-((1,2,3,3a,7a-η)-2-methyl-4-phenyl-1H-inden-1-yl)silanaminato-(2-)-N-)-titan-dimethyl;
(N-(1, -Dimethylethyl)-1,1-di(4-methylphenyl)-1-((1,2,3,3a,7a-η)-2-methyl-4-phenyl-1H-inden-1-yl)silanaminato-(2-)-N-)-titan-bis(trimethylsilylmethyl);
(N-(1,1-Dimethylethyl)-1,1-di(4-methylphenyl)-1-((1,2,3,3a,7a-η)-2-methyl-4-phenyl-1H-inden-1-yl)silanaminato-(2-)-N-)-titan-(dimethylsilylen)bis(methylen);
(N-(1,1-Dimethylethyl)-1,1-di(4-methylphenyl)-1-((1,2,3,3a,7a-η)-2-methyl-4-phenyl-1H-inden-1-yl)silanaminato-(2-)-N-)-titan(III)-2-(N,N-dimethylamino)benzyl;
(N-(1,1-Dimethylethyl)-1,1-di(4-methylphenyl)-1-((1,2,3,3a,7a-η)-2-methyl-4-phenyl-1H-inden-1-yl)silanaminato-(2-)-N-)-titan(II)-1,4-diphenyl-1,3-butadien;
Dichloro(N-(cyclohexyl)-1,1-di(4-methylphenyl)-1-((1,2,3,3a,7a-η)-2-methyl-4-phenyl-1H-inden-1-yl)silanaminato-(2-)-N-)-titan;
(N-(Cyclohexyl)-1,1-di(4-methylphenyl)-1-((1,2,3,3a,7a-η)-2-methyl-4-phenyl-1 H-inden-1-yl)silanaminato-(2-)-N-)-titan-dimethyl;
(N-(Cyclohexyl)- 1,1- di (4- methylphenyl)- 1-((1,2,3,3a, 7a- η)- 2- methyl- 4- phenyl- 1H- inden- 1- yl) silanaminato-(2-)-N-)-titan-bis(trimethylsilylmethyl);
(N-(Cyclohexyl)- 1,1- di (4- methylphenyl)- 1-((1,2,3,3a, 7a- η)- 2- methyl- 4- phenyl- 1H- inden- 1- yl) silanaminato-(2-)-N-)-titan-(dimethylsilylen)bis(methylen);
(N-(Cyclohexyl)- 1,1- di (4- methylphenyl)- 1-((1,2,3,3a, 7a- η)- 2- methyl- 4- phenyl- 1H- inden- 1- yl) silanaminato-(2-)-N-)-titan(III)-2-(N,N-dimethylamino)benzyl und
(N-(Cyclohexyl)- 1,1- di (4- methylphenyl)- 1-((1,2,3,3a, 7a- η)- 2- methyl- 4- phenyl- 1H- inden- 1- yl) silanaminato-(2-)-N-)-titan(II)-1,4-diphenyl-1,3-butadien.

**11.** Ein Verfahren gemäß einem der vorhergehenden Ansprüche, wobei das Dien ein konjugiertes oder polycyclisches Dien ist.

**12.** Ein Verfahren gemäß Anspruch 11, wobei das Dien Ethylidennorbornen ist.

**Revendications**

**1.** Procédé de polymérisation de l'éthylène, d'au moins un diène, et éventuellement d'une α-oléfine en $C_{3-12}$ par mise en contact d'un mélange de ceux-ci avec un complexe métallique et un cocatalyseur d'activation dans des conditions de polymérisation d'addition et récupération du produit polymère résultant, dans lequel le complexe métallique correspond à la formule :

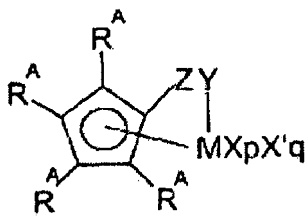

(I)

où M est un métal du groupe 4 qui est à l'état d'oxydation formel de +2, +3 ou +4 ;
chaque $R^A$ représente indépendamment de l'hydrogène, ou un groupe hydrocarbyle, halogénohydrocarbyle, hydrocarbyloxyhydrocarbyle, dihydrocarbylaminohydrocarbyle, dihydrocarbylamino, hydrocarbyloxy, hydrocarbylsilyle, ou trihydrocarbylsilylhydrocarbyle de 1 à 80 atomes, sans compter les atomes d'hydrogène, et deux groupes $R^A$ sont liés ensemble de manière covalente ;
Z représente $(R^D)_2Si$=, dans lequel chaque $R^D$ représente indépendamment un groupe alkaryle en $C_{7-20}$ ou deux groupes $R^D$ ensemble représentent un groupe arylène à substitution alkyle ou polyalkyle ayant jusqu'à 40 atomes

de carbone ; et
Y est lié à M et Z et est choisi dans le groupe constitué de -O-, -S-, $NR^E$-, et -$PR^E$- ; dans lequel chaque $R^E$ représente indépendamment de l'hydrogène, ou un élément choisi parmi les groupes hydrocarbyle, hydrocarbyloxy, silyle, alkyle halogéné, aryle halogéné, et des combinaisons de ceux-ci, ledit groupe $R^E$ ayant jusqu'à 20 atomes autres que des atomes d'hydrogène
X représente un groupe ligand anionique ou dianionique ayant jusqu'à 60 atomes ne comprenant pas la classe des ligands qui sont des ligands cycliques, délocalisés, liés en position n ;
chaque X' représente indépendamment un ligand neutre ayant jusqu'à 40 atomes ;
p vaut 0, 1 ou 2, et est inférieur de deux à l'état d'oxydation formel de M lorsque X est un ligand anionique, et lorsque X est un ligand dianionique, p vaut 1 ; et
q vaut 0, 1 ou 2
**caractérisé en ce que**

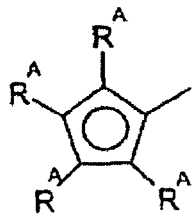

est un groupe 2-alkyl-4-arylindén-1-yle ayant jusqu'à 30 atomes de carbone au total.

**2.** Procédé selon la revendication 1, dans lequel le groupe 2-alkyl-4-arylindén-1-yle est le groupe 2-méthyl-4-phénylindén-1-yle.

**3.** Procédé selon la revendication 1, dans lequel le groupe 2-alkyl-4-arylindén-1-yle est le groupe 2-méthyl-4-naphtylindén-1-yle.

**4.** Procédé selon l'une quelconque des revendications précédentes, dans lequel M est le titane.

**5.** Procédé selon la revendication 4, dans lequel le complexe métallique correspond à la formule :

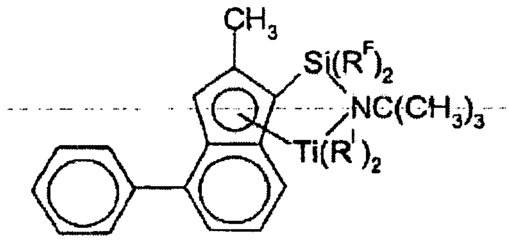

dans laquelle $R^F$ représente un groupe phényle à substitution alkyle en $C_{1-10}$ ; et
$R^I$ représente du chlore, un groupe méthyle, un groupe benzyle, un groupe triméthylsilylméthyle ou deux groupes $R^1$ ensemble représentent le (diméthylsilylène)-bis(méthylène).

**6.** Procédé selon la revendication 4, dans lequel le complexe métallique correspond à la formule :

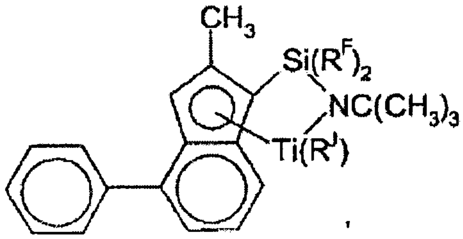

dans laquelle $R^F$ représente un phényle à substitution alkyle en $C_{1-10}$; et
$R^J$ représente un groupe allyle, 2-(diméthylamino) benzyle, 1,4-pentadiène ou 1,4-diphényl-1,3-butadiène.

**7.** Procédé selon la revendication 5 ou 6, dans lequel $R^F$ représente un phényle à substitution alkyle en $C_{4-10}$.

**8.** Procédé selon la revendication 5 ou 6, dans lequel $R^F$ représente un phényle à substitution n-butyle.

**9.** Procédé selon la revendication 5 ou 6, dans lequel $R^F$ représente un groupe p-n-butylphényle.

**10.** Procédé selon la revendication 1, dans lequel le complexe métallique est choisi dans le groupe constitué de :

dichloro (N-(1,1-diméthylethyl)-1,1-di (4-n-butylphényl)-1-((1,2,3,3a,7a-η)-2-méthyl-4-phényl-1H-indén-1-yl) silanaminato-(2-)-N-)-titane ;
(N-(1,1-diméthyléthyl)-1,1-di(4-n-butylphényl)-1-((1,2,3,3a,7a-η)-2-méthyl-4-phényl-1H-indén-1-yl)silanaminato-(2-)-N-)-titane diméthyle ;
(N-(1,1-diméthyléthyl)-1,1-di(4-n-butylphényl)-1-((1,2,3,3a,7a-η)-2-méthyl-4-phényl-1H-indén-1-yl)-silanaminato-(2-)-N-)-titane bis(triméthylsilylméthyle);
(N-(1,1-diméthyléthyl)-1,1-di(4-n-butylphényl)-1-((1,2,3,3a,7a-n)-2-méthyl-4-phényl-1H-indén-1-yl)-silanaminato-(2-)-N-)-titane (diméthylsilylène)bis-(méthylène) ;
(N-(1,1-diméthyléthyl)-1,1-di(4-n-butylphényl)-1-((1,2,3,3a,7a-η)-2-méthyl-4-phényl-1H-indén-1-yl)silanaminato-(2-)-N-)-titane(III) 2-(N,N-diméthylamino)benzyle ;
(N-(1,1-diméthyléthyl)-1,1-di(4-n-butylphényl)-1-((1,2,3,3a,7a-η)-2-méthyl-4-phényl-1H-indén-1-yl)silanaminato-(2-)-N-)-titan(II) 1,4-diphényl-1,3-butadiène ;
dichloro (N-(cyclohexyl)- 1,1- di (4- n- butylphényl)- 1-((1,2,3,3a, 7a- η)- 2- méthyl- 4- phényl- 1H- indén- 1- yl) silanaminato-(2-)-N-)-titane ;
(N-(cyclohexyl)- 1,1- di (4- n- butylphényl)- 1-((1,2,3,3a, 7a- η)- 2- méthyl- 4- phényl- 1H- indén- 1- yl)-silanaminato-(2-)-N-)-titane diméthyle ;
(N-(cyclohexyl)- 1,1- di (4- n- butylphényl)- 1-((1,2,3,3a, 7a- η)- 2- méthyl- 4- phényl- 1H- indén- 1- yl)-silanaminato-(2-)-N-)-titane bis(triméthylsilylméthyle) ;
(N-(cyclohexyl)- 1,1- di (4- n- butyl- phényl)- 1-((1,2,3,3a, 7a- η)- 2- méthyl- 4- phényl- 1H- indén- 1- yl)-silanaminato-(2-)-N-)-titane (diméthylsilylène)bis-(méthylène) ;
(N-(cyclohexyl)- 1,1- di (4- n- butylphényl)- 1-((1,2,3,3a, 7a- η)- 2- méthyl- 4- phényl- 1H- indén- 1- yl)-silanaminato-(2-)-N-)-titane(III) 2-(N,N-diméthylamino)-benzyle ;
(N-(cyclohexyl)- 1,1- di (4- n- butyl- phényl)- 1-((1,2,3,3a, 7a- η)- 2- méthyl- 4- phényl- 1H- indén- 1- yl)-silanaminato-(2-)-N-)-titan(II) 1,4-diphényl-1,3-butadiène ;
dichloro(N-(1,1-diméthyléthyl)-1,1-di(4-méthylphényl)-1-((1,2,3,3a,7a-η)-2-méthyl-4-phényl-1H-indén-1-yl) silanaminato-(2-)-N-)-titane ;
(N-(1,1-diméthyléthyl)-1,1-di(4-méthylphényl)-1-((1,2,3,3a,7a-η)-2-méthyl-4-phényl-1H-indén-1-yl)-silanaminato-(2-)-N-)-titane diméthyle ;
(N-(1,1-diméthyléthyl)-1,1-di(4-méthylphényl)-1-((1,2,3,3a,7a-η)-2-méthyl-4-phényl-1H-indén-1-yl)-silanaminato-(2-)-N-)-titane bis(triméthylsilylméthyle) ;
(N-(1,1-diméthyléthyl)-1,1-di(4-méthylphényl)-1-((1,2,3,3a,7a-η)-2-méthyl-4-phényl-1H-indén-1-yl)-silanaminato-(2-)-N-)-titane (diméthylsilylène)bis-(méthylène) ;
(N-(1,1-diméthyléthyl)-1,1-di(4-méthylphényl)-1-((1,2,3,3a,7a-η)-2-méthyl-4-phényl-1H-indén-1-yl)-silanaminato-(2-)-N-)-titane(III) 2-(N,N-diméthylamino)-benzyle ;
(N-(1,1-diméthyléthyl)-1,1-di(4-méthylphényl)-1-((1,2,3,3a,7a-η)-2-méthyl-4-phényl-1H-indén-1-yl)-silanaminato-(2-)-N-)-titane(II) 1,4-diphényl-1,3-butadiène ;
dichloro (N-(cyclohexyl)- 1,1- di (4- méthylphényl)- 1-((1,2,3,3a, 7a- η)- 2- méthyl- 4- phényl- 1H- indén- 1- yl)

silanaminato-(2-)-N-)-titane ;
(N-(cyclohexyl)- 1,1- di (4- méthylphényl)- 1-((1,2,3,3a, 7a- η)- 2- méthyl- 4- phényl- 1H- indén- 1- yl)-silanaminato-(2-)-N-)-titane diméthyle ;
(N-(cyclohexyl)- 1,1- di (4- méthylphényl)- 1-((1,2,3,3a, 7a- η)- 2- méthyl- 4- phényl- 1H- indén- 1- yl)-silanaminato-(2-)-N-)-titane bis(triméthylsilylméthyle) ;
(N-(cyclohexyl)- 1,1- di (4- méthylphényl)- 1-( (1,2,3,3a, 7a- η)- 2- méthyl- 4- phényl- 1H- indén- 1- yl)-silanaminato-(2-)-N-)-titane (diméthylsilylène)bis-(méthylène) ;
(N-(cyclohexyl)- 1,1- di (4- méthylphényl)- 1-((1,2,3,3a, 7a- η)- 2- méthyl- 4- phényl- 1H- indén- 1- yl)-silanaminato-(2-)-N-)-titane(III) 2-(N,N-diméthylamino)-benzyle ; et
(N-(cyclohexyl)- 1,1- di (4- méthylphényl)- 1-((1,2,3,3a, 7a- η)- 2- méthyl- 4- phényl- 1H- indén- 1- yl)-silanaminato-(2-)-N-)-titan(II) 1,4-diphényl-1,3-butadiène.

**11.** Procédé selon l'une quelconque des revendications précédentes, dans lequel le diène est un diène conjugué ou polycyclique.

**12.** Procédé selon la revendication 11, dans lequel le diène est l'éthylidène norbornène.